# EUROPÄISCHE PATENTSCHRIFT

(11) **EP 4 000 863 B1**
(45) Veröffentlichungstag und Bekanntmachung des Hinweises auf die Patenterteilung: **18.01.2023**
(21) Anmeldenummer: 21207178.1
(22) Anmeldetag: 09.11.2021
(51) Int. Cl.: B29C 55/08, B29C 55/10

(54) **BEHANDLUNGSANLAGE FÜR EINE DURCH EINEN BEHANDLUNGSOFEN HINDURCHFÜHRBARE FLEXIBLE MATERIALBAHN, INSBESONDERE KUNSTSTOFFFOLIE**
TREATMENT PLANT FOR A FLEXIBLE MATERIAL SHEET WHICH CAN BE PASSED THROUGH A TREATMENT FURNACE, ESPECIALLY A PLASTIC FILM
INSTALLATION DE TRAITEMENT POUR UNE BANDE DE MATIÈRE FLEXIBLE POUVANT ÊTRE GUIDÉE VERS UN FOUR DE TRAITEMENT, EN PARTICULIER FEUILLE EN MATIÈRE PLASTIQUE

(30) Priorität: 19.11.2020 DE 102020130631
(43) Veröffentlichungstag der Anmeldung: 25.05.2022
(73) Patentinhaber: Brückner Maschinenbau GmbH & Co. KG, 83313 Siegsdorf (DE)
(72) Erfinder: Höglauer, Christoph, 83329 Waging am See (DE)
(74) Vertreter: Flach Bauer & Partner Patentanwälte mbB

(56) Entgegenhaltungen:
- EP-A1- 1 616 690
- WO-A1-2012/067573
- US-A- 3 181 250

## Beschreibung

Die Erfindung betrifft eine Behandlungsanlage für eine durch einen Behandlungsofen hindurchführbare flexible Materialbahn, insbesondere in Form eines Kunststofffolienfilms, nach dem Oberbegriff des Patentanspruches 1.

Bei derartigen Behandlungsanlagen handelt es sich häufig um Folienreckanlagen, die insbesondere in der Kunststofffolienherstellung Anwendung finden. Bekannt sind sog. Simultan-Reckanlagen, in welchen ein Kunststofffilm gleichzeitig in Längs- und Querrichtung gereckt werden kann. Ebenso bekannt sind sog. sequenzielle Reckanlagen, bei denen der Kunststofffilm in zwei aufeinanderfolgenden Stufen gereckt wird, beispielsweise zunächst in Längsrichtung und dann in Querrichtung (oder umgekehrt). Schließlich sind auch reine Längsreck- sowie reine Querreckanlagen bekannt.

Bekanntermaßen wird bei der Herstellung eines Kunststofffilms die zu reckende Materialbahn an den beiden gegenüberliegenden Filmrändern mittels Kluppen erfasst, die auf beiden Seiten der zu reckenden Materialbahn auf umlaufenden Führungsschienen verfahrbar angeordnet sind. Die Kluppen werden dabei nacheinander von einer Einlaufzone (in welcher der Rand beispielsweise einer zu reckenden Kunststofffolie erfasst wird) über eine Reckzone (in der die gegenüberliegende Kluppen auf den Führungsschienenabschnitten mit einer Querkomponente divergierend zur Transportrichtung voneinander weg bewegt werden) zu einer Auslaufzone und dann auf einem Rückweg wieder zur Einlaufzone verfahren, wobei die Folie der Reckzone nachgelagert in ein oder mehreren Behandlungszonen (Annealingzone, Kühlzone) beispielsweise noch einer gewissen Relaxation und/oder Wärmenachbehandlung üblicherweise unterzogen wird.

Der Kunststofffilm muss vor, während und nach dem eigentlichen Reckvorgang einer in den einzelnen Abschnitten unterschiedlichen Aufheiz- und bzw. Kühlphasen unterzogen werden. Von daher durchläuft die zu reckende Kunststofffolienbahn einen Ofen, der aufeinanderfolgend unterschiedliche Behandlungszonen (dazwischenliegend auch ggf. neutrale Zonen) aufweist. In diesen Behandlungszonen wird der herzustellende Kunststofffolienfilm nicht nur einer unterschiedlichen Wärmebehandlung unterzogen, sondern es muss vor allem auch eine Ofenluftversorgung vorgesehen sein, um den Ofeninnenraum der Reckanlage stets mit frischer Luft zu versorgen und die belastete Luft abzusaugen.

Da sich ein derartiger Behandlungsofen in der Regel in mehrere Behandlungsabschnitte in Form von Behandlungszonen gliedert, tritt der Kunststofffolienfilm, also allgemein die flexible Materialbahn, aus der einen Zone aus und tritt in eine nächste Zone ein, in der unter Umständen eine Behandlung der Materialbahn bei anderen Temperaturen stattfindet.

Grundsätzlich gliedert sich eine Reckanlage also in mehrere Zonen. So können beispielsweise eine Vorheizzone, eine Reckzone, eine Annealingzone und eine Kühlzone vorgesehen sein. Die Vorheiz- und Reckzone können auch als gemeinschaftliche Zone ausgebildet sein. Die Kühlzonen (aber auch grundsätzlich andere Zonen) können zudem in mehrere getrennte Zonen aufgegliedert sein, beispielsweise in eine erste und zweite Kühlzone, die aufeinanderfolgend vorgesehen sind, und eine dritte Kühlzone am Abschluss der Reckanlage, die z. B. durch eine zwischen der zweiten und der dritten Kühlzone vorgesehene Neutralzone getrennt ist. Eine derartige Neutralzone kann beispielsweise auch zwischen der Reckzone und der Annealingzone vorgesehen sein (und dann noch an anderen Stellen). In der Regel dort, wo eine Zone in eine Neutralzone und die Neutralzone dann wieder in eine nachfolgende Zone übergeht, ist für den durch den Reckofen hindurch bewegten Kunststofffolienfilm ein Eintritts- und ein Austrittsspalt (teilweise auch ein Eintritts- und ein Austrittsschlitz genannt) vorgesehen. Ansonsten können die einzelnen Zonen auch mehrere Kammern umfassen wie beispielsweise die Annealingzone, die eine Vielzahl von Kammern aufweisen kann. Zwischen den einzelnen Kammern einer Zone sind in der Regel keine Ein- und Austrittsspalte für den Kunststofffolienfilm vorgesehen.

Vor diesem Hintergrund stellt sich stets das Problem, dass beispielsweise im Bereich eines Auslasses von einer Behandlungszone in eine Neutralzone Fluid mit dem fortbewegten Film quasi mitgenommen, also "mitgerissen" wird. Ebenso kann beim Eintritt des Kunststofffolienfilms aus einer Neutralzone in eine nachfolgende Behandlungszone (Umgebungs-)Luft in den Behandlungsraum der nachfolgenden Behandlungszone mit eingetragen wird. Dieser Austritt vom Fluid aus einer Behandlungszone in eine Neutralzone sowie der Eintrag von Umgebungsluft (die in einer Neutralzone vorhanden ist) in eine nachfolgende Behandlungszone wird letztlich durch den durch den Reckofen hindurch bewegten Kunststofffolienfilm verursacht, der physikalisch bedingt angrenzendes Fluid oder angrenzende Luftschichten mitnimmt.

In der Regel befindet sich nämlich das aus einer Behandlungszone mitgenommene Fluid auf einer für die nachfolgende Behandlungskammer nicht optimalen Behandlungstemperatur, weil das entsprechend miteingeführte Fluid entweder zu heiß oder zu kühl ist und die eingestellte Behandlungskammertemperatur in der nachfolgenden Zone dadurch in unerwünschter Weise verändert. Auch kann durch diesen Fluidtransport in die Nachbarzone verunreinigtes Fluid mittransportiert werden, welches dann ggf. in der Nachbarzone zu unerwünschten Effekten führt z. B. zu einer Kondensation der unerwünschten Fluidkomponenten.

Neben dem durch die Folienbewegung mitgeführtem Fluid entsteht durch die unterschiedlichen Druckniveaus im Gesamtofen eine zusätzliche sich überlagernde Grundströmung, welche ebenfalls den Fluidaustausch zwischen den Behandlungskammern und/oder zwischen den Behandlungskammern einer nachfolgenden Neutralzone oder einer Neutralzone und einer nachfolgenden Behandlungskammer verstärkt.

Eine unzureichende Abschottung zweier verschiedener Zonen kann aber nicht nur einen relativ unkontrolliert austretenden Luftstrom über die gesamte Folienbahn bewirken, sondern kann darüber hinaus auch zu relativ unkontrollierbaren Druckverhältnissen führen. Bei sehr breiten Kunststofffolienbahnen und entsprechend unsteten Luftdruckverhältnissen können bei den vorgesehenen Austrittsspalten gleichzeitig ein Lufteinzug und ein Luftauszug über die gesamte Breite der Kunststofffolienbahn erfolgen, wobei die Kunststofffolienbahn dadurch über ihre Breite hinweg unterschiedlich temperiert werden könnte, was bei Kunststofffolien beispielsweise zu Planlagenproblemen führen kann.

In Kombination stellt sich also eine Grundströmung aufgrund der Schleppwirkung der Folie und/oder der bestehenden Druckdifferenzen im Ofen ein, die zu Zonen mit einer "falschen Temperatur" führen kann. So kann beispielsweise heiße Luft in eine kalte Ofenzone oder umgekehrt kalte Luft in eine heiße Ofenzone strömen.

Dies kann grundsätzlich zu einer schlechteren Folienqualität führen, d.h. zu schlechteren mechanischen und/oder optischen Eigenschaften der Folie aufgrund falscher Aufheizung bzw. falscher Abkühlung, zumindest also aufgrund keiner optimalen Aufwärmung oder Abkühlung. Diese Verschlechterungen treten vor allem beim Verstrecken der Folie auf.

Von daher ist bereits vorgeschlagen worden, eine thermische Trennung zwischen zwei aufeinanderfolgenden Behandlungskammern oder Behandlungszonen einzurichten, und zwar in Form sog. Neutralzonen. Derartige Neutralzonen können überall zwischen zwei Behandlungszonen vorgesehen sein, beispielsweise zwischen der Streck- und der Annealingzone oder beispielsweise zwischen der Annealing- und der Kühlzone sowie teilweise auch vor der letzten Kühlzone.

Gleichwohl hat sich allerdings herausgestellt, dass selbst die Realisierung von sog. Neutralzonen nicht ausreichend ist, da immer noch in unerwünscht hohem Maße beim Austritt der Materialbahn aus einer vorausgegangenen Behandlungszone dort befindliches Fluid aufgrund der Schleppwirkung in die Neutralzone eingeführt wird bzw. Fluid aus der Neutralzone in unerwünschter Menge über den Einführschlitz in die nachfolgende Behandlungszone mitgenommen wird.

Von daher ist bereits versucht worden, Abschottungseinrichtungen zu realisieren, um die Menge des mitgeschleppten gasförmigen Mediums beim Eintritt und/oder beim Austritt aus einer Behandlungskammer, in der Regel einem Ofen, weiter zu beschränken bzw. zu minimieren.

Gemäß der DE 92 13 802 U1 ist eine Abschottungseinrichtung für eine Reckanlage, insbesondere eine Breitreckanlage für Kunststofffolienbahnen vorgeschlagen worden, bei der im Wesentlichen tangential zur Folienbahn und dabei entgegengesetzt zur Abzugsrichtung der Folienbahn ein gasförmiger Medienstrom erzeugt wird.

Gemäß der EP 1 616 690 A1 wird bezüglich einer Reckanlage vorgeschlagen, über eine auf beiden Seiten der hindurchbewegten Folienband jeweils angeordnete Düseneinrichtung einen gasförmigen Medienstrom zu erzeugen, der in einem schrägen Winkel entgegengesetzt zur Abzugsrichtung der Folienband auf diese Folienband gerichtet ist. Diese Strömung wird anschließend durch eine in Abzugsrichtung vor einem Düsenkasten liegende Abzugseinrichtung abgesaugt.

Vor diesem Hintergrund ist es Aufgabe der vorliegenden Erfindung, eine nochmals verbesserte und bezüglich des Aufbaus vereinfachte Lösung für eine Abschottungsvorrichtung für eine Behandlungszone, insbesondere in Form eines Behandlungs- oder Reckofens für bewegte Materialbahnen insbesondere in Form einer zu reckenden Kunststofffolienbahn zu schaffen.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Es muss als durchaus überraschend angesehen werden, dass im Rahmen der Erfindung eine derart deutlich verbesserte Abschottungswirkung hinsichtlich der einzelnen Behandlungszonen oder Behandlungskammern erzielt werden kann., insbesondere auch deshalb, weil umfassende und langwierige in andere Richtung gehende Versuche allesamt nicht annähernd zu einem so guten Ergebnis geführt haben, wie dies im Rahmen der vorliegenden Erfindung möglich ist.

Dabei geht die Erfindung davon aus, dass eine Zonen- oder Bereichstrennung ohne mechanisch arbeitende Shutter auskommt, also ohne mechanische Einrichtungen, mit denen versucht wird, einen Einlass- oder Auslassspalt, durch den hindurch eine Filmbahn bewegt wird, in der Höhe zu begrenzen.

Erfindungsgemäß wird dies durch Erzeugung eines Luftvorhangs realisiert, der aber aufgrund seiner spezifischen Ausgestaltung gegenüber herkömmlichen Lösungen bei weitem wirkungsvoller und effizienter ist.

Die erfindungsgemäße Lösung beinhaltet dabei eine Düsenanordnung, die quer und insbesondere senkrecht zur Abzugsrichtung der flexiblen Materialbahn und dabei i.d.R. parallel zu der darunter hinweg bewegten flexiblen Materialbahn verläuft. Diese Düsenanordnung umfasst eine in Richtung der Materialbahn ausgerichtete Luftaustrittsöffnung oder in Form einer Vielzahl von nebeneinander angeordneten einzelnen Luftaustrittsöffnungen, worüber ein in Richtung Materialbahn strömender gasförmiger Medienstrom austreten kann. Im Gegensatz zu den nach dem Stand der Technik bekannten Lösungen jedoch ist die Anordnung derart, dass der gasförmige Medienstrom zumindest mit einer Richtungskomponente quer oder senkrecht zur Abzugsrichtung der Materialbahn auf diese trifft. Dieser gasförmige Medienstrom kann auch zusätzlich noch eine Komponente in oder entgegengesetzt zur Abzugsrichtung der flexiblen Materialbahn aufweisen. Erfindungsgemäß wichtig ist jedoch die Winkelausrichtung derart, dass der gasförmige Medienstrom in Querrichtung zur Abzugsrichtung und damit insbesondere in senkrechter Richtung bezogen auf die Abzugsrichtung in einem schrägen Anblaswinkel auf die Materialbahn trifft, vorzugsweise in einem Anblaswinkel kleiner als 85°. Bevorzugte Winkelbereiche können beispielsweise bei 30° bis 60° liegen.

Die erfindungsgemäßen Vorteile dieser schräg in Querrichtung zur Abzugsrichtung der Materialbahn angestellten Blasrichtung eines gasförmigen Medienstroms sind dabei sehr vielfältig. Einer der Hauptvorteile besteht darin, dass die Querkomponente des entsprechend willentlich ausgerichteten Medienstroms (Jets) sich mit der Produktlaufrichtung, also der in Abzugsrichtung fortbewegten flexiblen Materialbahn überlagert und sich dadurch eine schräge Abströmung über der Materialbahn ausbildet.

Der Vorteil dieser schrägen Überströmung der Materialbahn liegt in der Verschmierung des Wärmeübergangs. Normalerweise erfolgt bei einem senkrechten Auftreffen eines Prallstrahles auf der Materialbahn ein Energieaustausch mit der Materialbahn nur sehr lokal um einen Staupunkt herum. Der weitere Energieaustausch erfolgt anschließend durch die Abströmung des Prallstrahles des Medienstroms über die flexible Materialbahn hinweg. Diese Abströmung ist bei senkrecht auf die Materialbahn auftreffenden Prallstrahl des Fluidstroms überwiegend in Richtung der Achse der Anlage, also zum einen in und zum anderen gegen die Abzugsrichtung der Materialbahn gerichtet. Quer zu dieser Anlagenachse oder Abzugsrichtung kann das auftreffende Fluid nur sehr begrenzt abströmen, da hier bereits ein nächster benachbarter Prallstrahl auftrifft, wenn nämlich eine Vielzahl von DüsenAustrittsöffnungen quer zur Abzugsrichtung nebeneinander angeordnet ist (ebenso bei einer durchgehenden schlitzförmigen Düsen-Austrittsöffnung) und somit diese Stromrichtung versperrt ist.

Aus diesen beiden Anteilen des Wärmeübergangs (Prallstrahlzentrum und Abströmung des Fluids) ergibt sich in Summe über die Arbeitsbreite in Produktlaufrichtung (also in Abzugsrichtung der Materialbahn) ein streifenförmig ungleichmäßiger Wärmeaustausch bzw. Energieaustausch in die Materialbahn.

Die erfindungsgemäße Ausbildung eines "Luftvorhanges" kombiniert somit die Vorteile eines diskreten Fluidstrahls (mit einem sehr stabilen Fluidstrahl zur Zonentrennung bei insgesamt sehr günstigen Fertigungskosten) mit einem homogenen Energieaustausch einer flächigen Einblasung. Dadurch wird nicht nur eine hervorragende Zonentrennung, sondern auch eine sehr homogene Temperaturverteilung in dem betreffenden Produkt erreicht, bevorzugt in einer flexiblen Materialbahn beispielsweise in Form einer zu reckenden Folienbahn, und dies über die gesamte Arbeitsbreite der Materialbahn hinweg.

Zusätzlich ergibt sich als weiterer Vorteil, dass durch den geneigten Prallstrahl eine deutliche Reduzierung der Druckbelastung auf das betreffende Produkt, insbesondere die flexible Materialbahn verglichen mit einem senkrechten Prallstrahl erzielt wird. Dies wiederum schont das Produkt und erhöht somit die Qualität des betreffenden Produkts.

Durch die geneigte Strömung wird zudem in den Produktrandbereich mehr Fluid transportiert und somit auch der Wärmeaustausch in diesem Bereich verbessert, was beispielsweise bei einer zu reckenden Kunststofffolienbahn zu einer verringerten Breite des Randstreifens mit ansonsten schlechterer Qualität führt (dies ergibt letztlich eine Effizienzsteigerung bezüglich des herzustellenden Produkts).

Schließlich soll auch noch der sich durch die erfindungsgemäße Lösung ergebende weitere Vorteil erwähnt werden, wonach durch die schräg austretende Querströmung des gasförmigen Medienstroms eine gewisse "Reinigung" erzielt wird. Denn normalerweise transportiert oder schleppt das Transportsystem auch Fluid aus einer vorhergehenden Zone in die jeweils aktuelle Zone, was wiederum zu einer Vermischung von zum Beispiel kaltem, warmen oder verunreinigten Fluid insbesondere im Randbereich des herzustellenden oder zu verarbeiten Produktes (zum Beispiel flexible Materialbahn) und somit einem undefinierten Energieaustausch mit dem Produkt führt. Durch diese Querströmung wird das Transportsystem angeströmt und das gegebenenfalls mitgeschleppte Fluid ausgeblasen.

In einer bevorzugten Weiterbildung der Erfindung ist zudem vorgesehen, dass die Düsenanordnung zumindest zwei in Längsrichtung der Düsenanordnung und damit quer und insbesondere senkrecht zur Abzugsrichtung der Materialbahn verlaufende Öffnungsreihen, also Düsenaustrittsöffnungen für den austretenden gasförmigen Fluidstrom aufweist. Diese beiden Öffnungsreihen sind in Abzugsrichtung versetzt und bevorzugt parallel zueinander angeordnet. Dabei ist die schräge Ausrichtung der Düsenanordnung derart, dass das ausgeblasene gasförmige Fluid in der einen Düsenreihe quer zur Abzugsrichtung der Materialbahn auf den einen Randbereich der Materialbahn gerichtet ist, und in der dazu versetzt liegenden zweiten Düsenreihe in entgegengesetzter Richtung ausgerichtet ist. Dadurch lässt sich eine bisher nicht bekannte Trennung und damit Shutter-Wirkung zwischen zwei aufeinanderfolgenden Zonen realisieren. Dabei lässt sich dies ohne mechanisch bewegte und/oder anpassbare Shutter oder in ihrer Größe veränderbare Shutterblenden erzielen.

Der Vollständigkeit halber wird angemerkt, dass die erfindungsgemäße Lösung die gewünschten Vorteile nicht nur am Übergang von einer Zone in eine nächste Zone erzielbar sind, sondern ebenso auch beim Einlauf in die bzw. beim Auslauf aus der Reckanlage und/oder einem Reckofen. Auch dies ist im Grunde genommen nichts anderes als ein Zonenwechsel, nämlich beim Einlauf von den Bedingungen außerhalb bzw. vor der Reckanlage bzw. dem Reckofen zu den in der nachfolgenden ersten Zone herrschenden Bedingungen. Beim Auslauf findet ebenfalls im Grunde genommen ein Zonenwechsel statt, nämlich von den innerhalb der letzten Zone herrschenden Bedingungen zu den außerhalb oder nach der Reckanlage bzw. dem Reckofen herrschenden Bedingungen.

Schließlich kann die erfindungsgemäße Lösung aber selbst innerhalb einer Zone umgesetzt werden, um die Anblasung der Folie innerhalb dieser Zone zu verbessern und/oder um für Bereiche innerhalb einer Zone eine weitere Untergliederung und/oder Trennung und Aufteilung in Zonen-Teilbereiche zu ermöglichen.

Die Erfindung wird nachfolgend anhand von Zeichnungen näher erläutert. Dabei zeigen im Einzelnen:

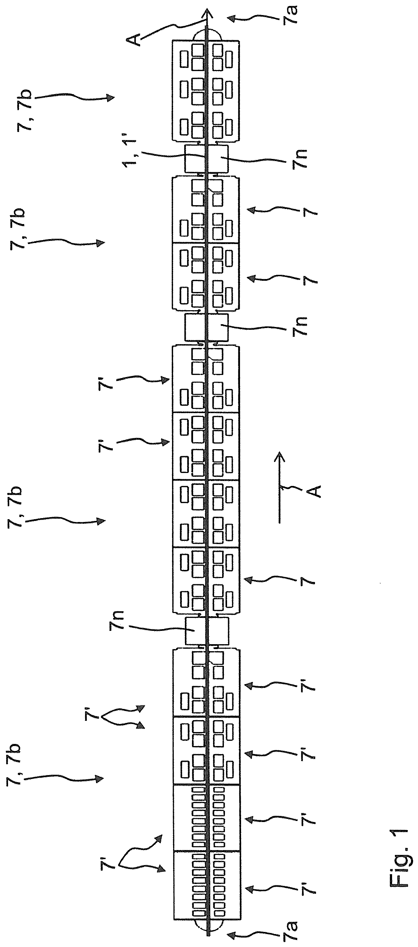

- Figur 1:: eine schematische Seitenansicht einer Anlage zur Bearbeitung einer durch die Anlage hindurch bewegten Materialbahn;

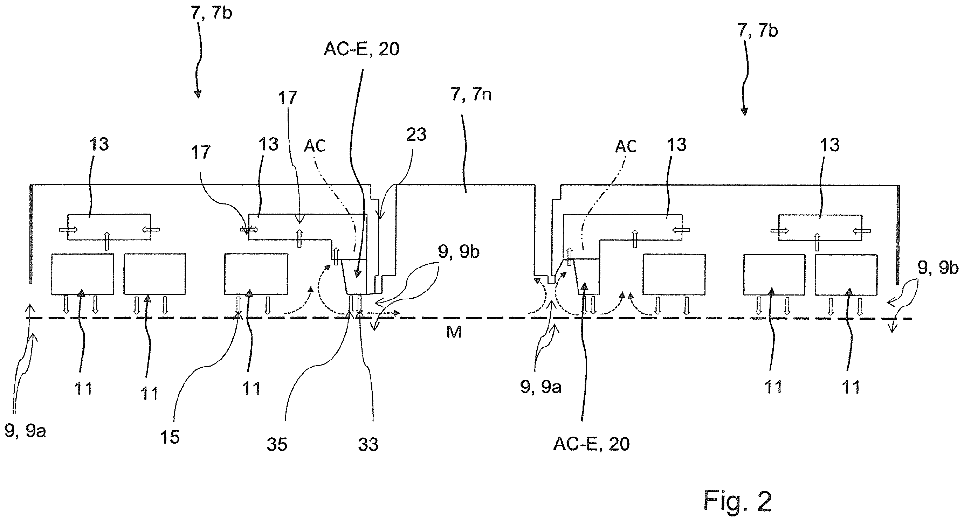

- Figur 2:: einen Ausschnitt aus der vorstehend genannten Figur 1 in Seitenansicht unter Darstellung zweier Behandlungszonen, die in Abzugsrichtung einer Materialbahn voneinander beanstandet sind, und zwar im Ausführungsbeispiel unter Ausbildung einer neutralen Zone zwischen beiden Behandlungszonen;

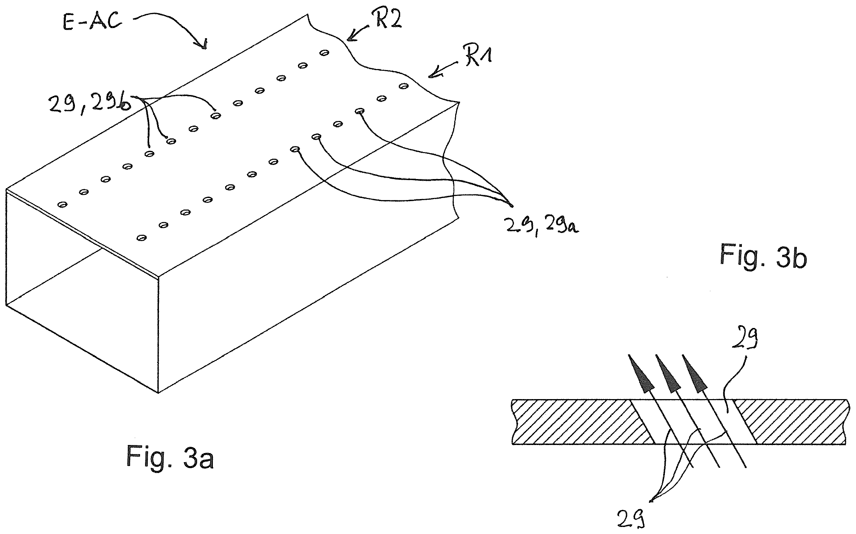

- Figur 3a:: eine schematische Unteransicht auf die Einblaseinrichtung mit den darin eingebrachten Düsenöffnungen, die beispielhaft in zwei Reihen angeordnet sind, nämlich zur Erzeugung von zwei Fluidströmen, die mit einer Strömungskomponente zum einen auf die eine Seite der Materialbahn und zum anderen auf die gegenüberliegende zweite Seite der Materialbahn gerichtet sind;
- Figur 3b:: eine auszugsweise schematische Schnittdarstellung durch die Unterseite der Einblaseinrichtung, und zwar durch eine in dieser Unterseite schräg eingebrachte Düsenöffnung;

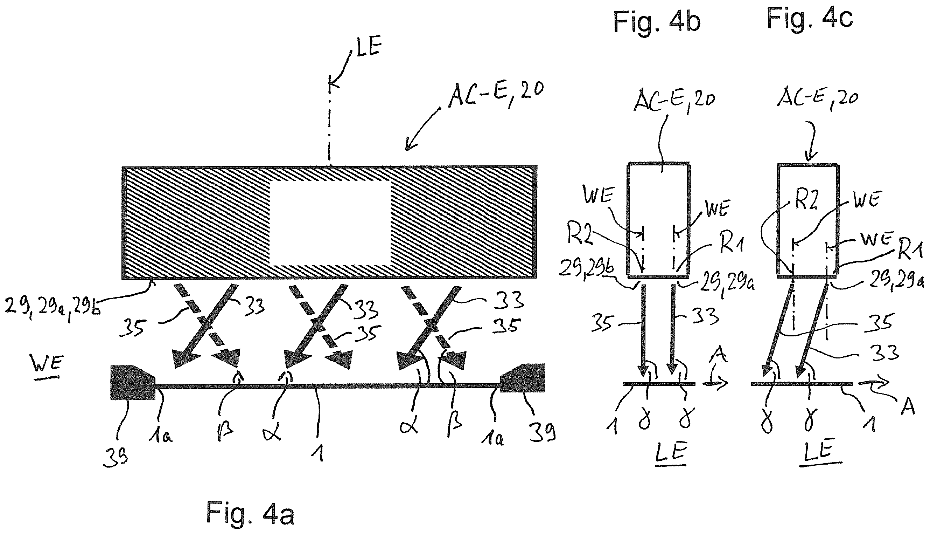

- Figur 4a:: eine parallel zur Abzugsrichtung wiedergegebene Ansicht auf die sich quer über die Materialbahn erstreckende Einblaseinrichtung unter Verdeutlichung der auf die Materialbahn gerichteten Strömungsvektoren, die im gezeigten Ausführungsbeispiel in Querrichtung schräg auf die Materialbahn treffen;
- Figur 4b:: eine zu Figur 4a um 90° gedrehte Ansicht quer zur Materialbahn zur Verdeutlichung, dass die schräg auf die Materialbahn ausgerichteten Strömungsvektoren des aus der Einblaseinrichtung austretenden Fluidstroms in Seitenansicht senkrecht auf die Materialbahn auftreffen, also weder in Abzugsrichtung noch in Gegenrichtung dazu mit einer zusätzlichen Winkelkomponente schräg auf die Materialbahn auftreffen;
- Figur 4c:: eine zu Figur 4b abweichende Darstellung in Seitenansicht, bei der die aus der Einblaseinrichtung austretenden und auf die beiden Seitenränder der Materialbahn schräg ausgerichteten Fluidströme noch mit einer zusätzlichen Anblaswinkelkomponente in Abzugsrichtung oder entgegengesetzt zur Abzugsrichtung gegenüber der Materialbahn auftreffen können;

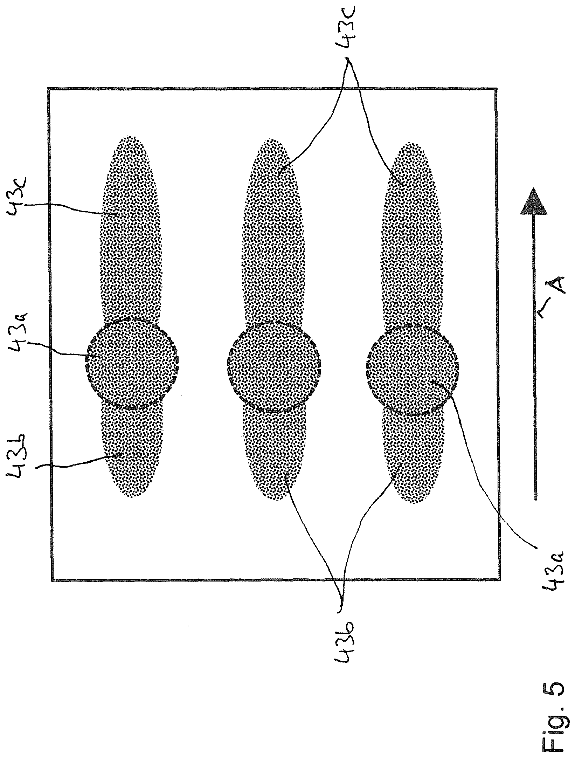

- Figur 5:: eine schematische Darstellung des Bereichs bei einer herkömmlichen Anlage, bei welcher der Prallstrahl eines gasförmigen Fluidstroms auf der Materialbahn auftrifft, nämlich unter Darstellung jener Bereiche, in denen ein entsprechender Energieaustausch mit der Wärme des auftreffenden gasförmigen Fluids unter Berücksichtigung der Abzugsrichtung der Materialbahn stattfindet;

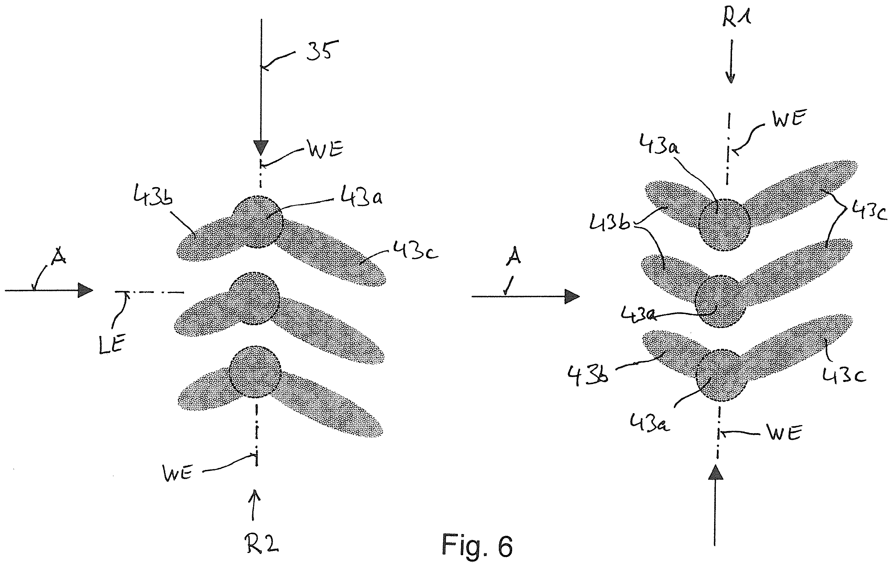

- Figur 6:: eine entsprechende Darstellung zu Figur 5, jedoch bezüglich der erfindungsgemäßen Lösung;

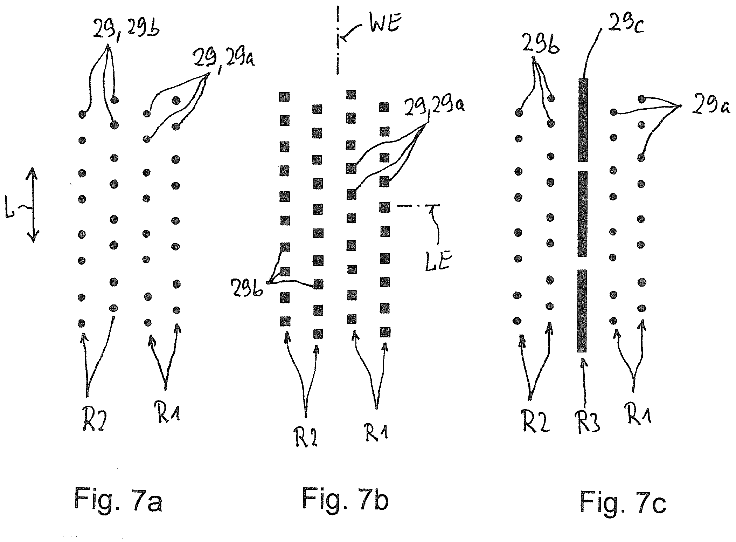

- Figur 7a bis 7e:: verschiedene Darstellungen für Austrittsöffnungen für das Fluid in der Einblaseinrichtung.

Nachfolgend wird auf Figur 1 Bezug genommen, in der eine schematische Längsschnittdarstellung einer Anlage zur Bearbeitung einer durch die Anlage hindurchbewegten Materialbahn, allgemein eines Produktes gezeigt ist. Im vorliegenden Fall handelt es sich um eine Kunststofffolien-Reckanlage.

Die in Figur 1 wiedergegebenen Anlage 3 insbesondere in Form einer Folienreckanlage 3' zeigt einen Reckofen 3", wobei durch die Folienreckanlage 3' und damit durch den Reckofen 3" eine Materialbahn 1 in Abzugsrichtung A hindurchbewegt wird, d.h. beispielsweise ein Kunststofffolienfilm 1'. Bei der Anlage 3 insbesondere in Form einer Folienreckanlage 3' kann es sich um eine Simultan-Reckanlage oder auch um eine sequentielle Reckanlage handeln, bei der eine Längs- und Querreckung nicht gleichzeitig (wie bei der Simulanreckanlage), sondern erst in Längs- und dann in Querrichtung oder umgekehrt durchgeführt wird. Grundsätzlich kann es sich auch um eine Querreckanlage handeln.

Eine entsprechende Anlage umfasst beispielsweise einen entsprechenden Gehäuseaufbau 5 mit einer Vielzahl von aufeinander folgenden Zonen 7. Im Fall einer Kunststofffolienreckanlage handelt es sich bei den Zonen 7 üblicherweise um Behandlungszonen 7b, die über eine Neutralzone 7n voneinander getrennt sind. Die einzelnen Behandlungszonen können dabei nicht nur eine, sondern beispielsweise zwei oder allgemein mehrere Behandlungskammern 7' umfassen. Alle Zonen 7 bilden dabei den Reckofen 3", der von der bewegten Materialbahn 1 insbesondere in Form des Kunststofffolienfilms 1' durchlaufen wird.

Der Aufbau ist üblicherweise symmetrisch zur Ebene E, die durch die bewegte Materialbahn 1 definiert wird. Es sind aber auch unsymmetrische Aufbauten möglich. Für den im Rahmen der vorliegenden Erfindung interessierenden Bereich verläuft die Abzugsrichtung A der Materialbahn 1 parallel zur Materialbahnebene E, die die Lage der Materialbahn beschreibt. Die Abzugsrichtung A verläuft dabei ferner parallel zur Anlagen-Längsrichtung AR.

Die einzelnen Behandlungszonen 7b weisen dabei jeweils zoneneingangsseitig einen Eingangspalt 9a und austrittsseitig einen Austrittsspalt 9b auf (also allgemein einen Durchlassspalt 9), der so hoch und so breit bemessen ist, dass die Materialbahn 1 ohne Berührung der Begrenzungskanten des Eingangs- und/oder Austrittsspaltes oder -schlitzes 9a, 9b durch diese Schlitzanordnung (Durchlassspalt 9), hindurch hindurchbewegt werden kann, um Beschädigungen der Materialbahn, insbesondere in Form des Kunststofffolienfilms zu vermeiden.

Wie schematisch anhand von Figur 1 dargestellt ist, kann in den einzelnen Zonen der insbesondere hindurchbewegte Kunststofffolienfilm auf unterschiedliche Temperaturen aufgeheizt werden. Zwischen den einzelnen Zonen können die bereits erwähnten Neutralzonen 7n vorgesehen sein, um zwei aufeinander folgende Zonen stärker voneinander zu trennen, damit kein gasförmiges Behandlungsfluid leicht aus einer Zone 7 in eine nachfolgende nächste Zone 7 gelangen kann.

Im Sinne der Erfindung stellt auch der Raum vor der in Abzugsrichtung ersten oder letzten Zone 7 eine Zone dar, nämlich eine sogenannte äußere Zone 7a oder Außenzone 7a.

Um mögliche Schleppwirkungen unter Mitnahme von gasförmigem Behandlungsfluid aus einer Zone in eine nachfolgende Zone - verursacht durch die bewegte Materialbahn - zu verhindern (also z.B. auch von der in Figur 1 links liegenden Außenzone 7a in die erste Zone 7 oder von der letzten Zone 7 in die in Abzugsrichtung A dann folgende und in Figur 1 rechts liegende Außenzone 7a), ist erfindungsgemäß nunmehr eine Zonen- oder Bereichstrennung ohne mechanische Shutter oder Sperrbleche o.ä. Einrichtungen vorgesehen. Dies wird durch eine optimierte Fluid-Einblasung realisiert, die gegebenenfalls mit einer zusätzlichen Fluid-Absaugung ausgestattet und damit ergänzt sein kann.

Dazu wird nachfolgend auf Figur 2 Bezug genommen, in welcher ein vergrößerter Detail-Längsschnitt durch die Anlage 3 gezeigt ist. Zu sehen sind zwei Behandlungszonen 7, 7b, zwischen denen in Abzugsrichtung A eine Neutralzone 7n vorgesehen ist. Dabei ist in Figur 2 zur Vereinfachung nur die obere Hälfte der Anlage gezeigt (wobei ein entsprechend in der Regel spiegelbildlich ja Anlagenaufbau unterhalb der Materialbahn 1 vorgesehen ist) .

Die einzelnen Behandlungszonen 7b umfassen dabei in der Regel eine oder mehrere in Abzugsrichtung A versetzt zueinander angeordnete Einblaseinrichtungen 11 sowie Absaugeinrichtungen 13, die sich in der Regel über die Breite der bewegten Materialbahn erstrecken. Die Absaugung-Einrichtungen 13 sind dabei üblicherweise zur Materialbahn 1 entfernter angeordnet als die Einblaseinrichtungen 11. Die in Figur 2 wiedergegebenen und von den Einblaseinrichtungen 11 wegführenden Doppelpfeile sowie die zu den Absaugung-Einrichtungen 13 hinführenden Doppelpfeile geben die Bewegung und Strömung des Fluids in Form eines gasförmigen Medienstroms wieder.

Aus Figur 2 ist auch zu ersehen, dass ferner eine Einrichtung zur Erzeugung eines Luftvorhanges AC vorgesehen ist, die nachfolgend auch als Luft-Abschott-Einrichtung AC oder Luft-Shutter AC bezeichnet wird. Die in zwei Reihen R1 und R2 austretenden gasförmigen Fluidstrahlen 33 bzw. 35 sind als Doppelpfeile in Figur 2 eingezeichnet. Die gestrichelten Pfeile 19 deuten dabei die sich einstellende Sekundärströmung an.

Figur 2 zeigt ferner, dass eine derartige Luft-Abschott-Einrichtung AC beispielsweise in Abzugsrichtung A am Ende einer Behandlungskammern 7b vorgesehen ist. Die Luft-Abschott-Einrichtung AC umfasst dabei eine Einblaseinrichtung AC-E, die auch als Luftvorhang-Erzeugungseinrichtung AC-E bezeichnet werden kann, und eine Absaugeinrichtung AC-A, mittels der gasförmiges Fluid aus der Behandlungszone 7b wieder abgesaugt werden kann.

Die Einblaseinrichtung AC-E weist eine Düsenanordnung D auf, die beispielsweise in Form eines Düsenkastens 20 gebildet sein kann, der sich über die gesamte Breite und im Wesentlichen über die gesamte Breite oder darüber hinaus in Querrichtung vorzugsweise senkrecht zur Abzugsrichtung A der Materialbahn 1 erstreckt. Dabei ist bezüglich der in Rede stehenden und in Figur 2 links liegenden Behandlungskammer 7b anzumerken, dass die Luft-Abschott-Einrichtung AC mit dem zugehörigen Düsenkasten 20 benachbart zu einer Zonentrennwand 23 angeordnet ist, die einen Durchlassspalt 9 aufweist, durch den die Materialbahn 1 kontaktfrei hindurchgeführt ist. Die Zonentrennwand 23 und der darin ausgebildete Durchlassspalt 9 verlaufen quer zur Abzugsrichtung A und insbesondere senkrecht zur Abzugsrichtung A und damit der Anlagenlängsrichtung AR.

Dabei ist die Absaugeinrichtung AC-A mit ihren quer zur Materialbahn verlaufenden Ansaugöffnung oder Ansaugöffnungen 27 zur Materialbahn 1 entfernter angeordnet als die Einblaseinrichtung AC-E mit ihrer Düsenanordnung D und den zugehörigen Düsenaustrittsöffnungen 29 (worauf später noch eingegangen wird).

Bei der in Figur 2 der Neutralzone 7n in Abzugsrichtung A nachgeordneten Behandlungskammern 7b ist die entsprechende Luft-Abschott-Einrichtung AC ähnlich aufgebaut, wobei hier die Ansaugöffnungen 27 der Absaugungseinrichtungen AC-A in Abzugsrichtung A der Düseneinrichtung D auch vorgelagert sein können.

Abweichend oder ergänzend zu Figur 2 können entsprechende Luftvorhänge AC z.B. auch bei der in Figur 2 links liegenden Behandlungskammer 7 eingangsseitig und der in Figur 2 rechtsliegen gezeigten Behandlungskammer 7 ausgangsseitig angeordnet sein. Derartige Luftvorhänge AC könnten sogar in den Außenzonen 7a vorgehen sein, also z.B. vor der in Abzugsrichtung ersten Zone 7 und der in Abzugsrichtung letzten Zone 7. Schließlich könnten derartige Luftvorhänge AC zu den Zonentrennwänden 23 entfernter oder versetzter in den Behandlungskammern 7 selbst angeordnet sein, also beispielsweise in einem Längenabschnitt zwischen 10% bis 90% bezogen auf die Länge einer Zone 7. Dieser Bereich, in dem ein Luftvorhang AC angeordnet sein kann, kann auch zwischen 20% bis 80% oder 30% bis 70% oder 40% bis 60% der Länge einer Zone 7 liegen. Insoweit stellen die anhand von Figur 1 gezeigten Behandlungskammern 7' ebenfalls Zonen 7 im Sinne der Erfindung dar.

Figur 3a zeigt ausschnittsweise eine Unteransicht der Einblaseinrichtung AC-E der erläuterten Luft-Abschott-Einrichtung AC, woraus zu ersehen ist, dass diese Einblaseinrichtung AC-E vorzugsweise in Form eines entsprechenden Düsenkastens 20 zumindest zwei Reihen R1 und R2 mit Düsenöffnungen 29 umfasst.

Die Düsenöffnungen 29 können dabei bevorzugt aus schräg gebohrten Fluid-Austrittsöffnungen bestehen, auf deren Bedeutung nachfolgend eingegangen wird. Diese schräg gebohrten Fluid-Austrittsöffnungen 29' sind in einer auszugsweisen Schnittdarstellung durch die die Düsenöffnungen 29 aufweisende Düsenwand 20' des Düsenkastens 20 in Figur 3b gezeigt.

In Figur 4a ist schematisch eine in Abzugsrichtung A oder entgegensetzt dazu ausgerichtete Seitenansicht der Luft-Abschott-Einrichtung AC, d.h. insbesondere des zugehörigen Düsenkastens 20 schematisch wiedergegeben. Dabei ist angedeutet, wie aus den bevorzugt aus einer Vielzahl von Düsenöffnungen 29 bestehenden Austrittsöffnungen in den angegebenen beiden Reihen R1 und R2 das gasförmige Fluid ausströmt.

Die erfindungsgemäße Anordnung ist dabei derart, dass beispielsweise in der die Düsenöffnungen 29, 29a umfassenden Reihe R1 die Austrittsöffnungen so gebohrt, gestaltet oder ausgerichtet sind, dass das gasförmige Fluid entsprechend den Strömungspfeilen 33 in Richtung Materialbahn 1 strömt. Dabei ist die Strömungsrichtung entsprechend den Strömungspfeilen 33 in einem Anblaswinkel α gegenüber der Materialbahnebene E der Materialbahn 1 schräg ausgerichtet. Der Anblaswinkel α liegt dabei in einer senkrecht zur Abzugsrichtung A und damit senkrecht zur flexiblen Materialbahn 1 verlaufenden Winkelebene WE, die somit der in Figur 4a ersichtlichen Zeichnungsebene oder einer dazu parallelen Ebene entspricht.

Die in der dazu in der Regel parallel verlaufenden Reihe R2 ebenfalls schräg ausgebildeten Austrittsöffnungen 29, 29b sind aber nun gegensinnig zu der Schräglage der in der ersten Reihe R1 ausgebildeten Austrittsöffnungen 29a ausgerichtet, so dass das aus dieser zweiten Reihe R2 ausströmende gasförmige Fluid entsprechend den gestrichelten Strömungspfeilen 35 bei der Darstellung gemäß Figur 4a in Richtung Materialbahn 1 strömt. Der Anblaswinkel liegt dabei ebenfalls in einer senkrecht zur Abzugsrichtung A und damit senkrecht zur flexiblen Materialbahn 1 verlaufenden Winkelebene WE, dessen Winkelöffnungsbereich zwischen der Strahlrichtung, also den Fluidstrahlen 35 zum einen und der Ebene E der Materialbahn 1 liegt.

Die Größe des Anblaswinkel α wie aber auch die Größe des Anblaswinkel β können in weiten Bereichen gewählt werden. Vorzugsweise sollen sie kleiner als 85°, insbesondere kleiner als 80°, 75°, 70°, 65°, 60°, 55° oder 45° sein. Umgekehrt sollen die entsprechenden Werte für den Anblaswinkel α wie aber auch für den Anblaswinkel β > 30°, insbesondere > 35°, 30°, 35°, 40°, 45°, 50°, 55°, 60°, 65°, 70°, 75° oder gar > 80° sein.

In Figur 4b ist eine Seitendarstellung auf die Einblaseinrichtung AC-E in Pfeilrichtung 40 in Figur 4a gezeigt. Daraus ist zu ersehen, dass bevorzugt sowohl in der Reihe R1 als auch in der Reihe R2 die Düsenöffnungen 29, 29a, 29b so ausgerichtet sind, dass die ausströmende Richtung gemäß der Strömungsverhältnisse 33 und 35 in der Winkelebene WE liegen, die senkrecht zur Materialbahnebene E und damit senkrecht zur flexiblen Materialbahn 1 ausgerichtet ist. Mit anderen Worten sind die Strömungsvektoren 33 und 35 nur schräg in der zur Abzugsrichtung A senkrecht stehenden Winkelebene WE liegend ausgerichtet.

Allerdings wird angemerkt, dass es sich bei dem Winkel oder Anblaswinkel α gegebenenfalls auch nur um eine in der erwähnten Winkelebene WE liegenden Winkelkomponente handeln kann, nämlich dann, wenn der entsprechende Strömungswinkel eine zusätzliche schräge Ausrichtkomponente in Abzugsrichtung oder entgegengesetzt zur Abzugsrichtung aufweist. Auch dies ist im Rahmen der Erfindung möglich, wobei wichtig ist, dass die Strömungsrichtung aus den Düsenöffnungen 29a, 29b in jeder Reihe R1 oder R2 zumindest eine Strömungskomponente in Richtung quer und insbesondere senkrecht zur Abzugsrichtung A auf die Materialbahn 1 aufweist.

Dies ist in der zu Figur 4a abweichenden Darstellung gemäß Figur 4c wiedergegeben. Daraus ist zu ersehen, dass das aus der Einblaseinrichtung AC-E bzw. den Düsenkasten 20 aus den Düsenöffnungen 29, 29a und 29b ausströmende Fluid nicht nur in einem schrägen Anblaswinkel α bzw. β in Richtung der Materialbahn 1 ausströmt, sondern dass diese Ausströmrichtung noch mit einer zusätzlichen Winkelkomponente γ geneigt ist. Diese zusätzlichen Winkel- oder Anblaswinkel-Komponente γ verläuft in einer Längsebene LE, die senkrecht zur die Materialbahnebene E (und damit die flexible Materialbahn 1) und dabei nicht senkrecht, sondern parallel zur Abzugsrichtung A ausgerichtet ist. Diese Längsebene LE verläuft somit auch senkrecht zu der oben erläuterten Winkelebene WE, in der die schrägen Ausström-, Anström- oder Anblaswinkelwinkel α bzw. β gebildet sind. Dabei sind die Strömungsvektoren 33 und 35 bei der Darstellung gemäß Figur 4b mit einer zusätzlichen Anblaswinkel-Komponente γ geneigt, wobei bei der Darstellung gemäß Figur 4b diese Neigung und damit diese Anblaswinkel-Komponente entgegengesetzt zur Abzugsrichtung A ausgerichtet ist. Grundsätzlich wäre auch eine entgegengesetzte Neigung mit einem Winkel γ, also einer Anblaswinkel-Komponente γ auch derart möglich, dass die Strömungsvektoren 33 und 35 zusätzlich mit der Komponente des Winkels γ in Abzugsrichtung A auf die Materialbahn 1 auftreffen.

Die erfindungsgemäße Anordnung mit dem schräg in Querrichtung auf die Materialbahn auftreffenden Fluid bewirkt als Nebeneffekt auch einen Reinigungsprozess. Denn wie aus der schematischen Darstellung gemäß Figur 4a zu ersehen ist, wird die Materialbahn 1 üblicherweise an den gegenüberliegenden Materialbahnrändern 1a über längs einer Führungsbahn verfahrbare Kluppen 39 in der Materialbahnebene E aufgespannt gehalten. Dies hat zur Folge, dass der Fluidstrom, der aus den Düsenöffnungen 29a in der einen Reihe R1 austritt, beispielsweise in Richtung der in Figur 4a links vorgesehenen Kluppen 39 eine entsprechende Strömungskomponente aufweist, wohingegen der aus den Düsenöffnungen 29b in der zweiten Reihe R2 austretende Fluidstrom eine Strömungskomponente in Richtung auf die auf der gegenüberliegenden Seite befindlichen und in Figur 4a rechtsliegenden Kluppen 39 aufweist. Dadurch wird also eine Querströmung erzielt, die zu dem Reinigungseffekt beiträgt und zusätzlich über das Transportsystem mitgeschlepptes gasförmiges Fluid seitlich ausbläst.

Besonders vorteilhaft ist, wenn die Einblastemperatur der Luft-Abschott-Einrichtung AC der Temperatur der nächsten Zone oder aber der Zone entspricht, in der die Luft-Abschott-Einrichtung AC positioniert ist. Bezogen auf Figur 2 besitzt beispielsweise das über die dortige Luft-Abschott-Einrichtung AC eingeblasene Fluid die gleiche Temperatur, wie die Fluidströme, die über die verbleibenden weiteren Einblaseinrichtungen 11 eingeblasen werden. Entsprechendes gilt bevorzugt für den Fluidstrom, der eingangsseitig in die in Figur 2 rechtsliegende Behandlungszone 7b eingeblasen wird.

Problematisch könnte bei starken auf die Materialbahn 1 auftreffenden diskreten Fluid- oder Prallstrahlen sein, dass sie im Bereich des Staupunktes einen lokal sehr hohen Energieaustausch mit dem Produkt, d.h. im gezeigten Ausführungsbeispiel mit der flexiblen Materialbahn 1 erzeugen. Zudem ist der lokale Staudruck insbesondere auf dünne und sensible Produkte wie eine Kunststofffolienbahn hoch.

Der erfindungsgemäße Vorteil der schrägen Überströmung des Gasstroms (Fluidstroms) in Richtung auf das Produkt, hier in Form der flexiblen Materialbahn 1, liegt in einer "Verschmierung" des Wärmeübergangs. Normalerweise erfolgt bei einem senkrecht auftretenden Fluid- oder Prallstrahl der Energieaustausch sehr lokal um einen Staupunkt herum. Der weitere Energieaustausch erfolgt anschließend nur durch die Abströmung des Fluid- oder Prallstrahls über das Produkt, also nach Art einer Plattenströmung beispielsweise auf dem flächigen Produkt in Form eines Kunststofffilms. Diese Abströmung erfolgt bei zur Materialbahnebene E des Produkts oder der Materialbahn ausgerichteten Prallstrahlen überwiegend in Richtung der Anlagenachse (also in oder gegen die Abzugsrichtung, allgemein im oder gegen den Produktlauf). Quer zur Anlagenachse und damit zur Abzugsrichtung A kann das auftretende Fluid nur sehr begrenzt abströmen, da hier bereits der nächste Prallstrahl auftrifft und somit diese Stromrichtung versperrt ist. Dies ist beispielhaft in Figur 5 wiedergegeben.

Durch die Vorschubbewegung des Produkts, also durch die Abzugsgeschwindigkeit des Kunststofffolienfilms ergibt sich bei herkömmlichen Anströmverhältnissen der in Figur 5 in Draufsicht auf die Materialbahn 1 wiedergegebene verschmierte Wärmeübergang, wobei in dieser Figur der durch den senkrecht auf die Materialbahn 1 auftreffende Prall- oder Fluidstrom durch ein kreisförmiges Wärmezentrum 43a, der entgegengesetzt zur Produkt-Bewegungsrichtung und damit zur Abzugsrichtung A abströmende Teil des Fluidstroms als durch die Abzugsbewegung A verkürzter Wärmeübergangsbereich 43b (oder Energieaustauschbereich 43b) und der in Produkt-Bewegungsrichtung, also in Abzugsrichtung A abströmende Teil des Fluidstroms als durch die Produkt-Bewegungsrichtung A vergrößerte Wärmeübergangsbereich 43c (oder Energieaustauschbereich 43c) eingezeichnet sind. Der verkürzte wie auch der vergrößerte Wärmeübergangsbereich 43b und 43c verlaufen also parallel zur Abzugsrichtung A.

Demgegenüber sind anhand von Figur 6 die sich im Rahmen der Erfindung ergebenden schräg verlaufenden Wärmeübergangsbereiche 43b und 43c gegenüber dem Wärmezentrum 43a dargestellt, wenn die Fluidströmung gemäß den Strömungspfeilen 33 und 35 nur schräg in Querrichtung zur Materialbahn 1 und ohne zusätzlichen Neigungswinkel oder Neigungswinkel-Komponente in Abzugsrichtung oder entgegengesetzte Abzugsrichtung A entsprechend der Darstellung gemäß Figur 4b auf die Materialbahnebene E und damit die Materialbahn 1 auftrifft.

Der in der dazu versetzten zweiten Reihe R2 gegensinnig austretende Fluidstrom erzeugt entsprechende, aber zur gegenüberliegenden Seite der Materialbahn 1 schräg ausgerichtete Wärmeübergangsbereiche, nämlich verkürzte Wärmeübergangsbereiche 43b und der demgegenüber verlängerten Wärmeübergangsbereiche 43c.

Mit anderen Worten zeigt also Figur 5 den Bereich eines Hauptenergieaustausches (zum Beispiel Form einer Aufheizung oder eine Abkühlung) mit dem Produkt bzw. mit der Materialbahn bei einem klassischen senkrechten Prallstrahl ohne Neigung in Querrichtung zur Längsrichtung und damit zur Abzugsrichtung A der Materialbahn. Gestrichelt sind hierbei der auftreffende Prallstrahl bzw. der Bereich um den Staupunkt in Form eines Kreises eingezeichnet. Die Abströmung erfolgt hier wie erwähnt gegen sowie aufgrund der Schleppwirkung der Materialbahn 1 etwas verstärkt in Produktlaufrichtung und damit in Abzugsrichtung A. Dies ist mit den beiden gemusterten als Wärme Übergangsbereich bezeichneten "Fahnen" 43b und 43c dargestellt.

Bei der erfindungsgemäßen Lösung gemäß Figur 6 ist demgegenüber der Bereich des Energieaustauschs in den beiden "Fahnen" schräg angestellt, da die Abströmung aufgrund der geneigten Fluidstrahlen eine Querkomponente besitzt.

Dabei ergibt sich also in beiden Reihen R1 und R2 jeweils in Abzugsrichtung A ein entgegengesetzter Verlauf der Wärmeübergangsbereiche 43b und 43c, die allerdings jeweils in Richtung eines Seitenbereiches der Materialbahn winkelförmig zueinander ausgerichtet sind. Der Wärmeübergangsbereich 43b ist dabei verkürzt und der Wärmeübergangsbereich 43c relativ dazu vergrößert, und zwar in Abhängigkeit der Abzugsbewegung der Materialbahn 1 in Abzugsrichtung A.

Würde das Fluid von der Einblaseinrichtung AC-E mit einer zusätzlichen Neigungskomponente γ beispielsweise entgegengesetzt zur Abzugsrichtung A entsprechend der Darstellung nach Figur 4b in Richtung Materialbahn 1 geblasen werden, so könnte abhängig von diesen Anblaswinkel-Komponente γ natürlich der Wärmeübergangs 43b vergrößert und der Wärmeübergangsbereich 43c verkleinert werden. Die Größenveränderung der Wärmeübergangsbereiche hängt letztlich von der Größe der Anblaswinkel-Komponente γ zum einen und von dem Einblas-Impuls des Fluid zum anderen ab.

Würde die Einblaseinrichtung AC-E so ausgebildet sein, dass das Fluid in einem zusätzlichen Neigungswinkel mit einer Anblaswinkel-Komponente γ in Richtung der in Abzugsrichtung A verlaufenden Längsebene LE ausgerichtet wäre, so würden die in Abzugsrichtung in Figur 6 gezeigten Wärmeübergangsbereiche 43c noch weiter vergrößert (verlängert) und die entgegengesetzte zur Abzugsrichtung A gebildeten Wärmeübergangsbereiche 43b verkleinert (verkürzt) werden.

Ebenso ist der Energieaustausch im Auftreffpunkt des Fluidstrahls reduziert, da sich durch die schräge Ausrichtung des Fluidstroms gegenüber der Materialbahn 1 keine senkrechte Prallströmung ausbilden kann und somit der maximale und sehr lokale Energieaustausch abgeschwächt wird. Beide, nämlich zum einen der reduzierte Energieaustausch im bisherigen Maximalbereich (Staupunktbereich) sowie die schräge Abströmung des Fluids nach dem Auftreffen auf das Produkt zum anderen, führt zu einem über die Arbeitsbreite besonders in Querrichtung verschmierten Energieaustausch. Dies resultiert in einer deutlich homogeneren Aufheizung oder Abkühlung beispielsweise der flexiblen Materialbahn oder allgemein des entsprechenden Produktes.

Diese Luft-Abschott-Einrichtung AC mit einer gegenüber dem Stand der Technik verbesserten Einblasung kombiniert somit die Vorteile eines diskreten Fluidstrahls (der grundsätzlich sehr stabil ist und zur Verwirklichung einer Zonentrennung auch kostengünstig herstellbar ist) mit dem homogenen Energieaustausch einer flächigeren Einblasung. Dadurch wird nicht nur eine hervorragende Zonentrennung, sondern auch eine sehr homogene Temperaturverteilung in dem Produkt oder beispielsweise der flexiblen Materialbahn über die gesamte Arbeitsbreite des Produkts oder Materialbahn hinweg erreicht.

Zudem ergibt sich durch den geneigten Prallstrahl eine deutliche Reduzierung der Druckbelastung auf das Produkt, verglichen mit einem senkrecht auftreffenden Prallstrahl. Das wiederum schont das Produkt und erhöht somit die Qualität des Produktes.

Anhand der Figuren ist schematisch gezeigt worden, dass die Erfindung bevorzugt zwei Reihen R1 und R2 mit Austrittsöffnungen 29a und 29b für zwei gegensinnig geneigte Fluidströme vorsieht. Grundsätzlich kann in vielen Fällen aber auch eine einzige Reihe ausreichend sein, deren Fluidstrahlen nur in einer Querrichtung gegenüber dem Materialbahn 1 oder dem zu bearbeiten Produkt geneigt sind.

Die Düsenaustrittsöffnungen 29, 29a, 29b können dabei unterschiedlich ausgebildet und geformt sein, was die Gestaltung der Austrittsöffnungen wie aber auch deren Anordnung in mehreren Lochmustern und/oder Lochreihen und/oder Lochformen betrifft.

Anhand der Figuren 7a bis 7e sind Beispiele für Düsenaustrittsöffnungen der Einblaseinrichtung AC-E der Einrichtung zur Erzeugung eines Luftvorhanges AC, also der sogenannten Luft-Abschott-Einrichtung AC gezeigt.

Daraus ist zu ersehen, dass bevorzugt diskrete Öffnungen oder Düsenöffnungen 29 verwendet werden, z.B. in Form von Rundlöchern (Figur 7a) oder in Form von quadratischen Löchern (Figur 7b) oder allgemein in Form von n-polygonalen Öffnungen. Diese Gestaltungen der Düsenöffnungen weisen eine sehr hohe Strahlstabilität auf und führen nur zu einem geringfügigen Fluktuieren oder Schwanken des Fluidstrahls. Diese stabilen Luftstrahlen oder Jets können somit gegen die ankommende Schleppströmung aufgrund der Bewegung des Produkts oder der Materialbahn und gegenüber der ankommenden Abströmung des Nachbardüsenkastens bestehen, also diese Schleppströmung aufhalten. Die sich einstellenden Verhältnisse hängen also außer von der Strahl-Querschnittsform (zum Beispiel rund oder quadratisch etc.) auch dem Impuls der eingebrachten Fluidströmung ab, also dem jeweiligen Prallstrahl.

Bei einem zu geringen Impuls kann der Fluid- oder Prallstrahl unter Umständen den angreifenden Strömungen nicht im gewünschten Ausmaß widerstehen, so dass er eventuell zumindest teilweise abgelenkt oder direkt abgesaugt wird.

Der eingebrachte und notwendige Impuls der Fluidströmung hängt dabei von der Materialbahn-Geschwindigkeit und den weiteren angreifenden Strömungskräften ab, zum Beispiel verursacht durch die Nachbarstrahlen, Wirbelsysteme oder Druckdifferenzen im Umfeld der Luft-Abschott-Einrichtung AC. In erster Größenordnung kann die 2- bis 8-fache Materialgeschwindigkeit, also die Abzugsgeschwindigkeit des Produkts/der Materialbahn als Einblas-Geschwindigkeit zugrunde gelegt werden. Ist die Geschwindigkeit und somit der Impuls zu gering, so kann die gewünschte Abschottung eventuell nicht oder nicht in ausreichendem Maße bewirkt werden.

Wie anhand von Figur 2 schematisch dargestellt ist, treffen die Schleppströmung und die Abströmung des Fluid- oder Prallstrahles aufeinander, so dass das Fluid nur noch nach oben ausweichen kann. Das Fluid wird in dem dadurch entstehenden Wirbelsystem anschließend durch die Absaugungseinrichtungen oder Absorberkästen 13 abgesaugt.

Wie bereits erwähnt, sind in den Figuren 7a bis 7e verschiedene Varianten jeweils bei Unteransicht auf den Düsenkasten wiedergegeben, der sich jeweils entsprechend der Pfeildarstellung in Längsrichtung L erstreckt (also quer und bevorzugt senkrecht zur Abzugsrichtung A der Materialbahn dabei parallel zur Materialbahnebene E der Materialbahn), wobei von dieser Längserstreckung nur ein vergleichsweise kurzer Ausschnitt der Unteransicht schematisch wiedergebeben ist.

Dabei ist die Ausblasöffnungsanordnung oder -einrichtung 57 in der Regel so gestaltet, dass die Öffnungen in einen Bereich auf der Unterseite 11 angeordnet sind, der etwas schmäler und mittig ist als die Breite der Unterseite 51 selbst.

Bei der Variante gemäß Figur 7a sind z.B. mehrere in Längsrichtung L des Düsenkasten 20 verlaufende und aufeinander folgende Rundlöcher 29 vorgesehen. Daraus ist zu ersehen, dass jede der beiden Lochreihen R1 und R2 beispielsweise aus einer Doppel-Lochreihe besteht, also diese Lochanordnungen der Düsenausdruck 29 in jeder Reihe R1 und R2 nicht aus einer einzelnen oder singulären Loch-Reihe bestehen müssen. Ebenso können die einzelnen Reihen auch dreifache oder allgemein n-fache nebeneinander angeordnete Lochreihen umfassen. Sind mehrere Lochreihen nebeneinander vorgesehen heißt dies nicht zwingend, dass der Einblaswinkel für die beiden oder mehreren Lochreihen identisch ist. Möglich ist ebenso, dass z.B. zwei oder mehrere seitlich nebeneinander verlaufende Lochreihen unterschiedliche und/oder sogar gegensinnig ausgerichtete Einblaswinkel besitzen. Mit anderen Worten können zwei aufeinander folgende Lochreihen alternierend ausgerichtete Einblaswinkel aufweisen und/oder sogar unterschiedliche Einblaswinkel in den einzelnen Lochreihen selbst besitzen.

Figur 7b ist eine zu Figur 7a entsprechende Darstellung gezeigt, allerdings unter Verwendung von quadratischen Löchern oder Luftaustrittsöffnung 29.

Bei der Darstellung gemäß Figur 7c ist gezeigt, dass zwischen den beiden in entgegengesetzter Seitenrichtung geneigt ausstrahlenden Düsenöffnungen gemäß den Reihen R1 und R2 noch eine neutrale Mittelreihe R3 mit Düsenöffnungen 29c vorgesehen ist, aus denen beispielsweise ein Fluidstrom exakt senkrecht in Richtung auf die Materialbahnebene E und damit senkrecht auf die Materialbahn 1 austreten kann, also einem der beschriebenen schrägen Winkeln α, β und/oder γ.

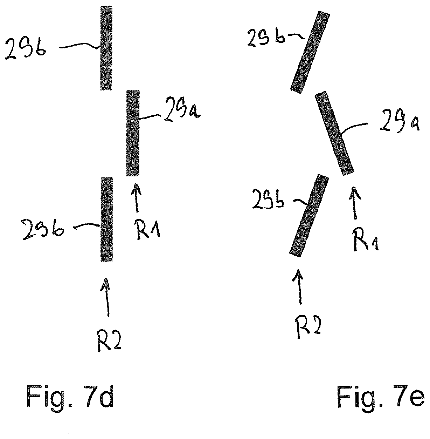

Bei der Darstellung gemäß Figur 7d ist angedeutet, dass entsprechend noch Austrittsöffnungen 29, d.h. 29a bzw. 29b in zwei nebeneinander sitzenden Reihen R1 und R2 angeordnet sind, die sich aber immer nur über eine Teilstrecke in Querrichtung oder in senkrechter Richtung zur Abzugsrichtung A der Materialbahn erstrecken. Diese Austrittsöffnungen sind hier summarisch als Rechteck förmige Austrittsöffnungen angedeutet. Sie umfassen allerdings im Inneren Leitanordnungen derart, dass die aus diesen Rechtecköffnungen austretenden Fluidströmungen in der Reihe R1 beispielsweise in dem Anblaswinkel α und in der Reihe R2 mit einem Anblaswinkel β geneigt gegenüber der Materialbahn austreten, wobei die Anblaswinkel-Komponente γ in oder entgegengesetzt zur Abzugsrichtung 90° oder aber auch wie beschrieben zusätzlich mit einer schrägen Neigungskomponente kleiner 90° ausgebildet sein kann.

Bei der Variante gemäß Figur 7e ist gezeigt, dass die beiden Reihen rechteckförmige Austrittsöffnungen aufweisen können, die sogar leicht schräg und nicht zwingend senkrecht zur Abzugsrichtung ausgebildet sind. In jeder dieser länglichen Austrittsöffnungen 29a bzw. 29b tritt aber der Fluidstrom wie beschrieben mit entsprechender Neigungsrichtung in der Winkelebene WE und gegebenenfalls mit einer zusätzlichen Winkelkomponente in oder entgegengesetzt zur Abzugsrichtung aus.

Ganz allgemein wird angemerkt, dass die Lochgeometrie für die Ausblasöffnungen eigentlich keine Einschränkungen erfährt und beliebig sein kann und zudem aus Kombinationen der nur beispielhaft gezeigten Varianten bestehen kann. Beispielsweise können neben runden oder eckigen Ausströmöffnungen oder Düsenöffnungen bei der erläuterten Einblaseinrichtung AC-E auch weitere geometrische Formen der Öffnung verwendet werden, wie zum Teil beschrieben und gezeigt in Form von einem oder mehreren Schlitzen, Rundlöchern, geformten Öffnungen wie Langlöchern oder ovalen Löchern, mit parallel oder versetzt oder angestellten Langlöchern oder auch in Form von Kombinationen dieser Varianten.

Die Ausblasöffnungsanordnung kann also wie erwähnt Löcher und/oder Schlitze und/oder allgemein Lochfelder umfassen, die über die Länge des Düsenkastens und/oder zumindest über die Breite der Materialbahn hinweg eine entweder gleichbleibende oder sich gleichmäßig wiederholende Geometrie und/oder Formgebung und/oder Größe bezüglich der Düsenaustrittsöffnungen aufweisen. Möglich ist aber auch, dass über die Länge des Düsenkastens hinweg keine gleichbleibende Geometrie vorgesehen ist. So kann beispielsweise die Ausblasöffnungsanordnung Löcher, Schlitze oder andere Durchtrittsöffnungen aufweisen, die sich über die Länge des Düsenkastens oder zumindest in Abschnitten über die Länge des Düsenkastens hinweg in der Form und in dem Durchmesser und/oder Größe ändern. Auch insoweit bestehen keine grundsätzlichen Einschränkungen.

Angemerkt wird ferner, dass die Ausblasdüsenanordnung der Düsenöffnungen 29, 29a oder 29b entsprechend der Länge und/oder Breite des Düsenkastens 20 gewählt werden kann. Idealerweise ist dabei die Ausblasdüsenanordnung zumindest in einer solchen Länge (und damit also quer oder senkrecht zur Abzugsrichtung der Materialbahn) verlaufend im Düsenkasten 20 vorgesehen, die der Breite der Materialbahn entspricht. Dadurch kann ein Medienstrom über die gesamte Breite der Materialbahn erzeugt werden.

## Patentansprüche

1. Behandlungsanlage für durch Behandlungsöfen hindurchführbare flexible Materialbahnen (1), insbesondere in Form eines Kunststofffolienfilms (1'), mit folgenden Merkmalen:
- die Behandlungsanlage umfasst zumindest zwei in einer Abzugsrichtung (A) der Materialbahn (1) aufeinanderfolgende Zonen (7; 7b; 7n; 7a; 7') mit einer Zonentrenneinrichtung (22),
- bezogen auf die Abzugsrichtung (A) der flexiblen Materialbahn (1) umfasst die Zonentrenneinrichtung (22) zumindest eine Luft-Abschott-Einrichtung (AC) mit einer sich quer zur Materialbahn (1) erstreckenden Einblaseinrichtung (AC-E), die so ausgebildet ist, dass darüber ein bis zur flexiblen Materialbahn (1) reichender gasförmiger Fluidstrom (S) erzeugt wird,
**gekennzeichnet durch** die folgenden weiteren Merkmale:
die Einblaseinrichtung (AC-E) ist ferner so ausgebildet, dass der aus der Einblaseinrichtung (AC-E) austretende gasförmige Fluidstrom mit einem gegenüber der flexiblen Materialbahn (1) gebildeten Anblaswinkel (**α**) oder mit einer gegenüber der flexiblen Materialbahn (1) gebildeten Anblaswinkel-Komponente (**α**) kleiner oder gleich 85° schräg in Richtung auf die flexible Materialbahn (1) und damit auf die durch die Materialbahn (1) gebildete Materialbahnebene (E) trifft, wobei der Anblaswinkel (**α**) oder die Anblaswinkel-Komponente (**α**) in einer senkrecht zur Abzugsrichtung (A) und damit senkrecht zur flexiblen Materialbahn (1) verlaufenden Winkelebene (WE) liegt.

2. Behandlungsanlage nach Anspruch 1, **dadurch gekennzeichnet, dass** die Einblaseinrichtung (AC-E) in Richtung Materialbahn (1) ausgerichtete Düsenöffnungen (29; 29a, 29b) aufweist, die in zumindest einer sich quer oder senkrecht über die Materialbahn (1) hinweg erstreckenden Reihe (R1, R2) angeordnet sind.

3. Behandlungsanlage nach Anspruch 1 oder 2, **dadurch gekennzeichnet, dass** aus der Einblaseinrichtung (AC-E) ein Fluidstrom austritt, der teils in einem auf die eine Seite der Materialbahn (1) schräg zu verlaufenden Anblaswinkel (α) oder Anblaswinkel-Komponente (α) und teils in einem dazu gegensinnig ausgerichteten, auf die gegenüberliegende Seite der Materialbahn (1) schräg zu verlaufenden Anblaswinkel (β) oder Anblaswinkel-Komponente (β) ausgerichtet ist.

4. Behandlungsanlage nach einem der Ansprüche 1 bis 3, **dadurch gekennzeichnet, dass** die Einblaseinrichtung (AC-E) in Richtung Materialbahn (1) ausgerichtete Düsenöffnungen (29; 29a, 29b) aufweist, die in zumindest zwei sich quer oder senkrecht über die Materialbahn (1) hinweg erstreckenden Reihen (R1, R2) angeordnet sind, wobei der aus den Düsenöffnungen (29; 29a) der einen Reihe (R1) längs der Strömungspfeile (33) austretende Fluidstrom in einem schrägen Winkel (α) oder Anblaswinkel-Komponente (α) auf die Materialbahn (1) trifft, und dass der aus den Düsenöffnungen (29; 29b) der zumindest einen weiteren Reihe (R2) längs der Strömungspfeile (35) austretende Fluidstrom in einem dazu entgegengesetzt geneigten schrägen Anblaswinkel (β) oder Anblaswinkel-Komponente (β) auf die Materialbahn (1) trifft.

5. Behandlungsanlage nach einem der Ansprüche 1 bis 4, **dadurch gekennzeichnet, dass** die Einblaseinrichtung (AC-E) so ausgebildet ist, dass der daraus austretende Fluidstrom in einem Anblaswinkel (α, β, γ) derart gegenüber der Materialbahnebene (E) und damit derart gegenüber der Materialbahn (1) geneigt ist,
a) dass der Anblaswinkel (α; γ) lediglich in der senkrecht auf die Abzugsrichtung (A) und damit die Materialbahnebene (E) ausgerichteten Winkelebene (WE) liegt und dessen Anblaswinkel-Komponente in Abzugsrichtung (A) oder entgegengesetzt zur Abzugsrichtung (A) 90° beträgt, oder
b) dass der Anblaswinkel (α; γ) zusätzlich eine Anblaswinkel-Komponente (γ) in Abzugsrichtung (A) oder entgegengesetzt zur Abzugsrichtung (A) aufweist, die einen Wert kleiner oder gleich 85° gegenüber der Materialbahnebene (E) aufweist.

6. Behandlungsanlage nach einem der Ansprüche 1 bis 5, **dadurch gekennzeichnet, dass** benachbart zur Einblaseinrichtung (AC-E) eine Absaugung-Einrichtung (AC-A) vorgesehen ist, die vorzugsweise parallel und/oder zur Materialbahnebene (E) so angeordnet ist, dass deren Ansaugöffnungen (27) entfernter zur Materialbahnebene (E) liegen als die Düsenöffnungen (29; 29a, 29b) in der Einblaseinrichtung (AC-E), und dass die Absaugung-Einrichtung (AC-A) in Abzugsrichtung (A) der Materialbahn (1) der Einblaseinrichtung (AC-E) vorgelagert oder nachgelagert ist.

7. Behandlungsanlage nach einem der Ansprüche 1 bis 6, **dadurch gekennzeichnet, dass** der über die Einblaseinrichtung (AC-E) austretende Fluidstrom eine Einblastemperatur aufweist, die der Temperatur in einer in Abzugsrichtung (A) nachfolgende Behandlungszone (7; 7b; 7n; 7a; 7') oder derjenigen Behandlungszone (7; 7b; 7n; 7a; 7'), in welcher die Einblaseinrichtung (AC-E) positioniert ist, entspricht oder davon um weniger als 20° C oder weniger als 15°, 10°, 5°, 2° oder weniger als 1° C abweicht.

8. Behandlungsanlage nach einem der Ansprüche 1 bis 7, **dadurch gekennzeichnet, dass** der in der Winkelebene (WE) liegende Anblaswinkel (α, β) oder die in der Winkelebene (WE) liegende Anblaswinkel-Komponente (α, β)
a) kleiner als 80°, 75°, 70°, 65°, 60°, 55° oder kleiner als 45° und/oder
b) und größer als 30°, 35°, 30°, 35°, 40°, 45°, 50°, 55°, 60°, 65°, 70°, 75° oder größer 80° ist.

9. Behandlungsanlage nach einem der Ansprüche 1 bis 8, **dadurch gekennzeichnet, dass** der in einer Längsebene (LE) senkrecht zur Winkelebene (WE) und dabei parallel zur Abzugsrichtung (A) liegende Anblaswinkel-Komponente (γ)
a) kleiner als 85°, 80°, 75°, 70°, 65°, 60°, 55° oder kleiner als 45° und/oder
b) und größer als 30°, 35°, 30°, 35°, 40°, 45°, 50°, 55°, 60°, 65°, 70°, 75° oder größer 80° bis maximal 85° ist.

10. Behandlungsanlage nach einem der Ansprüche 1 bis 9, **dadurch gekennzeichnet, dass** die Einblaseinrichtung (AC-E) Düsenöffnungen (29; 29 a, 29 B) aufweist oder umfasst, die aus rundlichen, kreisförmigen, quadratischen, ovalen, rechteckigen und/oder n-polygonalen Öffnungen oder Kombination der vorstehend genannten Öffnungen bestehen.

11. Behandlungsanlage nach eine der Ansprüche 1 bis 10, **dadurch gekennzeichnet, dass** der aus der Einblaseinrichtung (AC-E) austretende und in einem schrägen Anblaswinkel (α; B; γ) auf die Materialbahnebene (E) auftreffende Fluidstrom durch Düsenöffnungen (29; 29a, 29b) erzeugt wird, die
a) durch schräg in einer Austrittswand der Einblaseinrichtung (AC-E) verlaufende Bohrungen oder Kanäle und/oder
b) durch entsprechende, einen schrägen Fluidstrom erzeugende Strömungs-Leiteinrichtungen
gebildet sind.

12. Behandlungsanlage nach einem der Ansprüche 1 bis 11, **dadurch gekennzeichnet, dass** die Einblaseinrichtung (AC-E) so ausgebildet ist, dass darüber ein Fluidstrom in Richtung Materialbahn (1) mit einer Ausblasgeschwindigkeit abgegeben wird,
a) die zumindest der Abzugsgeschwindigkeit der Materialbahn (1) in Abzugsrichtung (A) oder zumindest der 2-, 3-, 4-, 5-, 6-, 7-, 8-, oder zumindest der 9-fachen Abzugsgeschwindigkeit der Materialbahn (1) entspricht, und/oder
b) die höchstens der 10-fachen Abzugsgeschwindigkeit der Materialbahn (1) in Abzugsrichtung (A) oder höchstens der 9-, 8-, 7-, 6-, 5-, 4-, 3- oder zumindest der 2-fachen Abzugsgeschwindigkeit der Materialbahn (1) entspricht.

13. Behandlungsanlage nach einem der Ansprüche 1 bis 12, **gekennzeichnet durch** folgende weitere Merkmale:
- zwischen den zumindest beiden aufeinanderfolgenden Zonen (7; 7b; 7n; 7a; 7') umfasst die Zonentrenneinrichtung (22) zur Trennung der aufeinanderfolgenden Zonen (7; 7b; 7n; 7a; 7') eine quer oder senkrecht zur Abzugsrichtung (A) der flexiblen Materialbahn (1) verlaufende Zonentrennwand (23),
- in der Zonentrennwand (23) ist ein Durchlassspalt (9; 9a, 9b) vorgesehen, durch den hindurch die flexible Materialbahn (1) kontaktfrei in Abzugsrichtung (A) hindurchbewegbar ist,
- bezogen auf die Abzugsrichtung (A) der flexiblen Materialbahn (1) ist die Luft-Abschott-Einrichtung (AC) mit der sich quer zur Materialbahn (1) erstreckenden Einblaseinrichtung (AC-E) der Zonentrennwand (23) vorgelagert und/oder nachgelagert, bevorzugt unmittelbar benachbart dazu.

14. Behandlungsanlage nach einem der Ansprüche 1 bis 13, **dadurch gekennzeichnet, dass** die Luft-Abschott-Einrichtung (AC) innerhalb einer Zone (7; 7b; 7n; 7a; 7') zur eingangsseitigen und/oder ausgangsseitigen Zonentrennwand (23) entfernt oder nicht-benachbart dazu angeordnet ist.

## Claims

1. Treatment machine for flexible material webs (1), in particular in the form of a plastics film (1'), which can be passed through treatment furnaces, said treatment machine having the following features:
- the treatment machine comprises at least two successive zones (7; 7b; 7n; 7a; 7') in an extraction direction (A) of the material web (1), having a zone separation device (22),
- in relation to the extraction direction (A) of the flexible material web (1), the zone separating device (22) comprises at least one air partitioning device (AC) having an injection device (AC-E) which extends transversely to the material web (1) and is designed such that a gaseous fluid flow (S) extending up to the flexible material web (1) is generated above it,
**characterised by** the following further features:
the injection device (AC-E) is also designed such that the gaseous fluid flow exiting from the injection device (ACE) impinges obliquely in the direction of the flexible material web (1) and thus on the material web plane (E) formed by the material web (1) at a blowing angle (α) formed with respect to the flexible material web (1) or with a blowing angle component (α) formed with respect to the flexible material web (1) of less than or equal to 85°, wherein the blowing angle (α) or the blowing angle component (α) lies in an angular plane (WE) running perpendicularly to the extraction direction (A) and thus perpendicularly to the flexible material web (1).

2. Treatment machine according to claim 1, **characterised in that** the injection device (AC-E) has nozzle openings (29; 29a, 29b) which are aligned in the direction of the material web (1) and arranged in at least one row (R1, R2) extending transversely or perpendicularly across the material web (1).

3. Treatment machine according to claim 1 or 2, **characterised in that** a fluid flow exits from the injection device (AC-E), which fluid flow is aligned partly at a blowing angle (α) or blowing angle component (α) running obliquely on one side of the material web (1) and partly at a blowing angle (β) or blowing angle component (β) running obliquely in the opposite direction on the opposite side of the material web (1).

4. Treatment machine according to any of claims 1 to 3, **characterised in that** the injection device (AC-E) has nozzle openings (29; 29a, 29b) which are aligned in the direction of the material web (1) and arranged in at least two rows (R1, R2) extending transversely or perpendicularly over the material web (1), wherein the fluid flow exiting from the nozzle openings (29; 29a) of one row (R1) along the flow arrows (33) impinges on the material web (1) at an oblique angle (α) or blowing angle component (α), and **in that** the fluid flow exiting from the nozzle openings (29; 29b) of the at least one further row (R2) along the flow arrows (35) impinges on the material web (1) at an oblique angle (β) or blowing angle component (β) inclined opposite thereto.

5. Treatment machine according to any of claims 1 to 4, **characterised in that** the injection device (AC-E) is designed such that the fluid flow exiting therefrom is inclined at a blowing angle (α, β, γ) in relation to the material web plane (E) and thus in relation to the material web (1) such that
a) the blowing angle (α; γ) lies only in the angular plane (WE) aligned perpendicularly to the extraction direction (A) and thus to the material web plane (E) and its blowing angle component in the extraction direction (A) or opposite to the extraction direction (A) is 90°, or
b) the blowing angle (α; γ) additionally has a blowing angle component (γ) in the extraction direction (A) or opposite to the extraction direction (A), which component has a value less than or equal to 85° with respect to the material web plane (E).

6. Treatment machine according to any of claims 1 to 5, **characterised in that** a suction device (AC-A) is provided adjacent to the injection device (AC-E), which suction device is arranged preferably parallel and/or with respect to the material web plane (E) such that its suction openings (27) are further away from the material web plane (E) than the nozzle openings (29; 29a, 29b) in the injection device (AC-E), and **in that** the suction device (AC-A) is upstream or downstream of the injection device (AC-E) in the extraction direction (A) of the material web (1).

7. Treatment machine according to any of claims 1 to 6, **characterised in that** the fluid flow exiting via the injection device (AC-E) has an injection temperature which corresponds to or deviates from the temperature in a subsequent treatment zone (7; 7b; 7n; 7a; 7') in the extraction direction (A) or the treatment zone (7; 7b; 7n; 7a; 7') in which the injection device (AC-E) is positioned by less than 20°C or by less than 15°, 10°, 5°, 2° or by less than 1°C.

8. Treatment machine according to any of claims 1 to 7, **characterised in that** the blowing angle (α, β) lying in the angular plane (WE) or the blowing angle component (α, β) lying in the angular plane (WE) is
a) less than 80°, 75°, 70°, 65°, 60°, 55° or less than 45° and/or
b) greater than 30°, 35°, 30°, 35°, 40°, 45°, 50°, 55°, 60°, 65°, 70°, 75° or greater than 80°.

9. Treatment machine according to any of claims 1 to 8, **characterised in that** the blowing angle component (γ) lying in a longitudinal plane (LE) perpendicularly to the angular plane (WE) and thus parallel to the extraction direction (A) is
a) less than 85°, 80°, 75°, 70°, 65°, 60°, 55° or less than 45° and/or
b) greater than 30°, 35°, 30°, 35°, 40°, 45°, 50°, 55°, 60°, 65°, 70°, 75° or greater than 80° up to a maximum of 85°.

10. Treatment machine according to any of claims 1 to 9, **characterised in that** the injection device (AC-E) has or comprises nozzle openings (29; 29a, 29b) which consist of round, circular, square, oval, rectangular and/or n-polygonal openings or a combination of the aforementioned openings.

11. Treatment machine according to any of claims 1 to 10, **characterised in that** the fluid flow emerging from the injection device (AC-E) and impinging on the material web plane (E) at an oblique blowing angle (α; β; γ) is generated by nozzle openings (29; 29a, 29b) which are formed
a) by bores or channels running obliquely in an outlet wall of the injection device (AC-E) and/or
b) by corresponding flow guide devices generating an oblique fluid flow.

12. Treatment machine according to any of claims 1 to 11, **characterised in that** the injection device (AC-E) is designed such that a fluid flow is discharged thereby in the direction of the material web (1) at an exhaust speed
a) that corresponds at least to the extraction speed of the material web (1) in the extraction direction (A) or at least to 2, 3, 4, 5, 6, 7, 8 or at least 9 times the extraction speed of the material web (1), and/or
b) that corresponds at most to 10 times the extraction speed of the material web (1) in extraction direction (A) or at most to 9, 8, 7, 6, 5, 4, 3 or at least 2 times the extraction speed of the material web (1).

13. Treatment machine according to any of claims 1 to 12, **characterised by** the following further features:
- between the at least two successive zones (7; 7b; 7n; 7a; 7'), the zone separation device (22) for separating the successive zones (7; 7b; 7n; 7a; 7') comprises a zone partition wall (23) running transversely or perpendicularly to the extraction direction (A) of the flexible material web (1),
- a passage gap (9; 9a, 9b) is provided in the zone partition wall (23), through which gap the flexible material web (1) can be moved in a contact-free manner in the extraction direction (A),
- in relation to the extraction direction (A) of the flexible material web (1), the air partitioning device (AC) with the blowing device (AC-E) extending transversely to the material web (1) is upstream and/or downstream of the zone partition wall (23), preferably immediately adjacent thereto.

14. Treatment machine according to any of claims 1 to 13, **characterised in that** the air partitioning device (AC) is arranged within a zone (7; 7b; 7n; 7a; 7') away from or not adjacent to the zone partition wall (23) on the inlet and/or outlet side.

## Revendications

1. Installation de traitement pour des bandes de matière (1) souples pouvant être guidées à travers des fours de traitement, notamment sous la forme d'un film de feuille en matière plastique (1'), avec les caractéristiques suivantes :
- l'installation de traitement comprend au moins deux zones (7 ; 7b ; 7n ; 7a ; 7') successives dans une direction de prélèvement (A) de la bande de matière (1) avec un dispositif de séparation de zones (22),
- le dispositif de séparation de zones (22) comprend, par rapport à la direction de prélèvement (A) de la bande de matière (1) souple, au moins un dispositif de capture d'air (AC) avec un dispositif d'injection par soufflage (AC-E) s'étendant perpendiculairement par rapport à la bande de matière (1) qui est conçu de telle manière qu'un flux de fluide (S) sous forme gazeuse allant jusqu'à la bande de matière (1) souple est créé par-dessus,
**caractérisée par** les autres particularités suivantes :
le dispositif d'injection par soufflage (AC-E) est en outre conçu de telle manière que le flux de fluide sous forme gazeuse sortant du dispositif d'injection par soufflage (AC-E) tombe, incliné en direction de la bande de matière (1) souple et ainsi sur le plan de la bande de matière (E) formé par la bande de matière (1), avec un angle de soufflage (α) formé par rapport à la bande de matière (1) souple, ou avec une composante d'angle de soufflage (α) formée par rapport à la bande de matière (1) souple, inférieur ou égal à 85 °, où l'angle de soufflage (α), ou la composante d'angle de soufflage (α), se situe dans un plan angulaire (WE) s'étendant perpendiculairement par rapport à la direction de prélèvement (A) et par conséquent perpendiculairement par rapport à la bande de matière (1) souple.

2. Installation de traitement selon la revendication 1, **caractérisée en ce que** le dispositif d'injection par soufflage (ACE) présente des orifices de buses (29; 29a; 29b) orientés en direction de la bande de matière (1) qui sont disposés dans au moins une rangée (R1, R2) s'étendant perpendiculairement ou verticalement par-dessus et au-delà de la bande de matière (1).

3. Installation de traitement selon la revendication 1 ou la revendication 2, **caractérisée en ce qu'**un flux de fluide sort du dispositif d'injection par soufflage (AC-E), qui est orienté partiellement dans un angle de soufflage (α), ou une composante d'angle de soufflage (α), s'étendant incliné vers un côté de la bande de matière (1) et partiellement incliné avec un angle de soufflage (β), ou une composante d'angle de soufflage (β), orienté dans le sens contraire sur le côté situé en face de la bande de matière (1).

4. Installation de traitement selon l'une des revendications 1 à 3, **caractérisée en ce que** le dispositif d'injection par soufflage (AC-E) présente des orifices de buses (29 ; 29a, 29b) orientés en direction de la bande de matière (1), qui sont disposés dans au moins deux rangées (R1 R2) s'étendant perpendiculairement ou verticalement par-dessus et au-delà de la bande de matière (1), où le flux de fluide sortant des orifices de buses (29 ; 29a) de l'une des rangée (R1) le long des flèches d'écoulement (33) tombe sur la bande matière (1) avec un angle aigu (α), ou une composante d'angle de soufflage (α), et que le flux de fluide sortant des orifices de buses (29 ; 29b) de l'au moins une autre rangée (R2) le long des flèches d'écoulement (35) tombe sur la bande de matière (1) avec un angle de soufflage (β), ou une composante d'angle de soufflage (β), orienté incliné dans le sens opposé.

5. Installation de traitement selon l'une des revendications 1 à 4, **caractérisée en ce que** le dispositif d'injection par soufflage (AC-E) est conçu de telle manière que le flux de fluide en sortant est incliné dans un angle de soufflage (α, β, γ) par rapport au plan de la bande de matière (E) et par conséquent par rapport à la bande de matière (1),
a) que l'angle de soufflage (α ;γ) se situe simplement dans le plan angulaire (WE) perpendiculaire à la direction de prélèvement (A), et par conséquent au plan de la bande de matière (E), et sa composante d'angle de soufflage dans la direction de prélèvement (A), ou est opposé de 90 ° par rapport à la direction de prélèvement (A), ou
b) que l'angle de soufflage (α ; γ) présente en outre une composante d'angle de soufflage (γ) dans la direction de prélèvement (A), ou à l'opposé de la direction de prélèvement (A), qui présente une valeur inférieure ou égale à 85 ° par rapport au plan de la bande de matière (E).

6. Installation de traitement selon l'une des revendications 1 à 5, **caractérisée en ce qu'**un dispositif d'aspiration (AC-A) est prévu au voisinage du disposition d'injection par soufflage (AC-E), qui est disposé de préférence parallèlement et/ou par rapport au plan de la bande de matière (E) de telle manière que ses orifices d'aspiration (27) se situent plus éloignés par rapport au plan de la bande de matière (E) que les orifices de buses (29 ; 29a ; 29b) dans le dispositif d'injection par soufflage (AC-E) et que le dispositif d'aspiration (AC-A) est logé avant ou après le dispositif d'injection par soufflage (AC-E) dans la direction de prélèvement (A) de la bande de matière (1).

7. Installation de traitement selon l'une des revendications 1 à 6, **caractérisée en ce que** le flux de fluide sortant au-dessus du dispositif d'injection par soufflage (AC-E) présente une température d'injection qui correspond à la température d'une zone de traitement (7 ; 7b ; 7n ; 7a ; 7') suivante dans la direction de prélèvement (A) ou à la zone de traitement (7 ; 7b ; 7n ; 7a ; 7') dans laquelle le dispositif d'injection par soufflage (AC-E) est positionné ou n'en dévie à moins de 20 °C, ou à moins de 15 °, 10 °, 5 °, 2 ° ou à moins de 1 °C.

8. Installation de traitement selon l'une des revendications 1 à 7, **caractérisée en ce que** l'angle de soufflage (α, β) se situant dans le plan angulaire (WE), ou la composante d'angle de soufflage (α, β) se situant dans le plan angulaire (WE),
a) est inférieur à 80 °,75 °, 70 °, 65 °, 55 ° ou inférieur à 45 °, et/ou
b) est supérieur à 30 °, 35 °, 30 °, 35 °, 40 °, 45 °, 50 °, 55 °, 60 °, 65 °, 70 °, 75 ° ou supérieur à 80 °.

9. Installation de traitement selon l'une des revendications 1 à 8, **caractérisée en ce que** la composante de l'angle de soufflage (γ) située dans un plan longitudinal (LE) perpendiculaire au plan angulaire (WE) et étant ainsi parallèle par rapport à la direction de prélèvement (A)
a) est inférieure à 85 °, 80 °, 75 °, 70 °, 65 °, 60 °, 55 ° ou inférieure à 45 °, et/ou
b) est supérieure à 30 °, 35 °, 30 °, 35 °, 40 °, 45 °, 50 °, 55 °, 60 °, 65 °, 70 °, 75 ° ou supérieure à 80 ° jusqu'à un maximum de 85 °.

10. Installation de traitement selon l'une des revendications 1 à 9, **caractérisée en ce que** le dispositif d'injection par soufflage (AC-E) présente ou comprend des orifices de buses (29 ; 29a ; 29B) qui sont constitués d'orifices arrondis, circulaires, carrés, ovales, rectangulaires et/ou n-polygonaux ou des combinaisons des orifices précédemment cités.

11. Installation de traitement selon l'une des revendications 1 à 10, **caractérisée en ce que** le flux de fluide sortant du dispositif d'injection par soufflage (AC-E) et tombant sur le plan de la bande de matière (E) avec un angle de soufflage (α ; B ; γ) aigu est créé par des orifices de buses (29 ; 29a, 29b) qui
a) sont formés par des alésages ou canaux passant en biais dans une paroi de sortie du dispositif d'injection par soufflage (AC-E) et/ou
b) sont formés par des dispositifs de guidage du flux générant un flux de fluide biaisé correspondant.

12. Installation de traitement selon l'une des revendications 1 à 11, **caractérisée en ce que** le dispositif d'injection par soufflage (AC-E) est conçu de telle manière qu'un flux de fluide est délivré en direction de la bande de matière (1) avec une vitesse d'injection par soufflage
a) qui correspond à au moins la vitesse de prélèvement de la bande de matière (1) dans la direction de prélèvement (A) ou à au moins 2 fois, 3 fois, 4 fois, 5 fois, 6 fois, 7 fois, 8 fois ou à au moins 9 fois la vitesse de prélèvement de la bande de matière (1), et/ou
b) qui correspond au maximum à 10 fois la vitesse de prélèvement de la bande de matière (1) dans la direction de prélèvement (A) ou au maximum à 9 fois, 8 fois, 7 fois, 6 fois, 5 fois, 4 fois, 3 fois ou à au moins deux fois la vitesse de prélèvement de la bande de matière (1).

13. Installation de traitement selon l'une des revendications 1 à 12, **caractérisée par** les autres particularités suivantes :
- le dispositif de séparation de zones (22) comprend entre les au moins deux zones (7 ; 7b ; 7n ; 7a ; 7') successives, pour la séparation des zones (7 ; 7b ; 7n ; 7a ; 7') successives, une paroi de séparation de zones (23) s'étendant perpendiculairement ou verticalement par rapport à la direction de prélèvement (A) de la bande de matière (1) souple,
- une fente de passage (9 ; 9a ; 9b) est prévue dans la paroi de séparation de zones (23) à travers laquelle la bande de matière (1) souple peut être passée sans contact dans la direction de prélèvement (A),
- par rapport à la direction de prélèvement (A) de la bande de matière (1) souple, le dispositif de capture d'air (AC) est logé avant et/ou après le dispositif d'injection par soufflage (AC-E) de la paroi de séparation de zones (23) s'étendant perpendiculairement par rapport à la bande de matière (1), de préférence à proximité immédiate de celui-ci.

14. Installation de traitement selon l'une des revendications 1 à 13, **caractérisée en ce que** le dispositif de capture d'air (AC) est disposé éloigné ou non voisin à l'intérieur d'une zone (7 ; 7b ; 7n ; 7a ; 7') vers la paroi de séparation de zones (23) du côté entrée et/ou du côté sortie.
